# EUROPEAN PATENT SPECIFICATION

(11) **EP 3 581 142 B1**
(45) Date of publication and mention of the grant of the patent: **03.11.2021**
(21) Application number: 19179337.1
(22) Date of filing: 11.06.2019
(51) Int. Cl.: A61C 7/00, A61C 9/00

(54) **METHOD FOR PROVIDING A DENTAL PROSTHESIS PROTOTYPE**
HERSTELLUNGSVERFAHREN EINES PROTOTYPS EINER ZAHNÄRZTICHEN PROTHESE
MÉTHODE POUR RÉALISER UN PROTOTYPE DE PROTHÈSE DENTAIRE

(30) Priority: 13.06.2018 IT 201800006261
(43) Date of publication of application: 18.12.2019
(73) Proprietor: Just Digital S.r.l., 40134 Bologna (IT)
(72) Inventor: ORTENSI, Luca, 40069 ZOLA PREDOSA BO (IT)
(74) Representative: Modiano, Micaela Nadia

(56) References cited:
- WO-A1-99/59106
- US-A1- 2014 313 304
- US-A1- 2015 351 638
- US-A1- 2017 312 064

## Description

The present invention relates to a method for providing an anatomical prototype.

In the field of dentistry, the need often arises to plan and define a process for a patient, which for therapeutic, aesthetic, or other purposes has the aim of replacing, creating or reconstructing teeth and tissues that in any case are related to the mouth.

This aim can be sought for example in relation to disorders or traumas of various kinds, which have caused the loss or deterioration of one or more teeth (or of entire dental arches, in the case of completely edentulous patients).

These circumstances can therefore require the intervention of the surgeon or dentist, indeed in order to restore the patient's correct mouth functionality, or more simply can cause an unwelcome aesthetic appearance, which in any case the patient wishes to remedy.

Moreover, the legitimate desire to improve one's own aesthetic appearance, and in particular one's own smile, can arise even in healthy subjects, if they have trouble in living with some characteristics of their face.

In all of these contexts, before intervening directly in the mouth of the patient it is preferable or necessary to provide a three-dimensional prototype which simulates the mouth (or a part thereof), with the shape that one presumes or wishes it to assume at the end of the hypothesized process.

This prototype of the "future" mouth (teeth) has first of all a predictive function. By simulating the procedure, it in fact allows the dentist and the patient to assess its outcome and therefore its appreciation. Furthermore, it can constitute a useful reference on which to model and build a prosthesis (for example for fully or partially edentulous patients).

Whatever the purpose for which the prototypes are intended (among the ones mentioned above or others), known methods for their provision are not free from drawbacks.

They in fact entail frequent sessions which the patient must undergo in order to be able to obtain the impressions that are needed to provide models of the mouth of the patient. These models can then be subsequently processed and shaped indeed to try to simulate the outcome that one wishes to obtain with the hypothesized process.

This is evidently a rather laborious procedure which entails a considerable waste of time, both for the patient, who has to go several times to the surgery, and for the dentist, who has to produce the model manually and in multiple steps and then modify it appropriately.

Moreover, the actual match between the outcome of the procedures and the prototype provided beforehand depends on the actual manual skill of the person in charge of providing said prototype, and this causes poor reproducibility of the method and often causes surprises for the patient when the results differs from expectations.

For these reasons also, and especially when the prototype is not strictly necessary, sometimes it is preferred to avoid providing it, thereby increasing the risk that the result is far from the expectations of the patient.

Document US 2015/351638 A1 discloses a method for providing an anatomical prototype, adapted to simulate the outcome of a treatment that can be performed on a subject.

The aim of the present invention is to solve the problems described above, devising a method that allows to provide an anatomical prototype in a practical and easy manner.

Within the scope of this aim, an object of the invention is to devise a method that offers the possibility to provide an anatomical prototype with effective predictive capabilities, i.e., capable of faithfully anticipating the outcome of procedures and treatments of various kinds on the mouth of a patient.

Another object of the invention is to devise a method that allows to provide an anatomical prototype without requiring the subject who is to receive the treatments to undergo frequent and prolonged sessions.

Another object of the invention is to devise a method that allows to provide an anatomical prototype without requiring laborious and complex manual work activities for the preparation of impressions and models.

Another object of the invention is to devise a method that ensures high reliability in operation.

Another object of the invention is to devise a method that provides a sequence of activities that is alternative to those of the methods of the known type.

Another object of the invention is to provide a method that can be performed easily starting from commonly commercially available elements and materials.

Another object of the invention is to provide a method that can be performed simply and at low costs.

This aim and these and other objects which will become better apparent hereinafter are achieved by a method according to claim 1 and/or by an anatomical prototype according to claim 11.

Further characteristics and advantages of the invention will become better apparent from the description of a preferred but not exclusive embodiment of the method according to the invention, illustrated by way of nonlimiting example in the accompanying drawings, wherein:

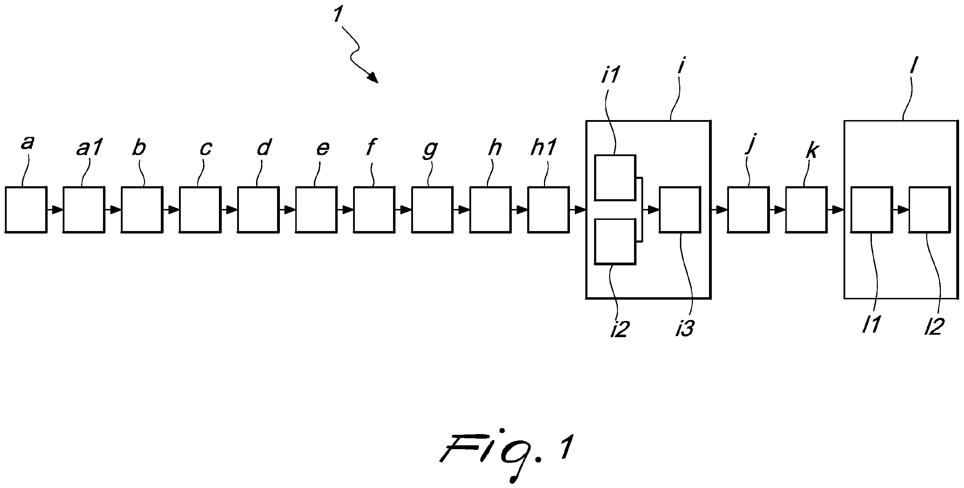

Figure 1 is a block diagram of the method according to the invention,
Figure 2 is a view of an example of a first digital photograph that can be acquired during the execution of step b. of the method according to the invention,
Figure 3 is a view of an example of a second digital photograph that can be acquired during the execution of step c. of the method according to the invention,
Figure 4 is a front view of an anatomical prototype provided by the method according to the invention.

With particular reference to the figures, the reference numeral 1 generally designates a method for providing an anatomical prototype 100. Said prototype 100 is adapted to simulate (or anticipate) the outcome of a treatment that can be performed on a subject 2. Said subject 2, before the treatment and the beginning of the method 1 according to the invention, may lack all or some teeth or still have them all.

More specifically, in the manners that will be described hereinafter, the prototype 100 obtained with the method 1 is a three-dimensional object that anticipates the shape assumed by the dental arches (or by at least part thereof) of said subject 2 indeed at the end of the treatment that he or she will subsequently have to or wish to undergo.

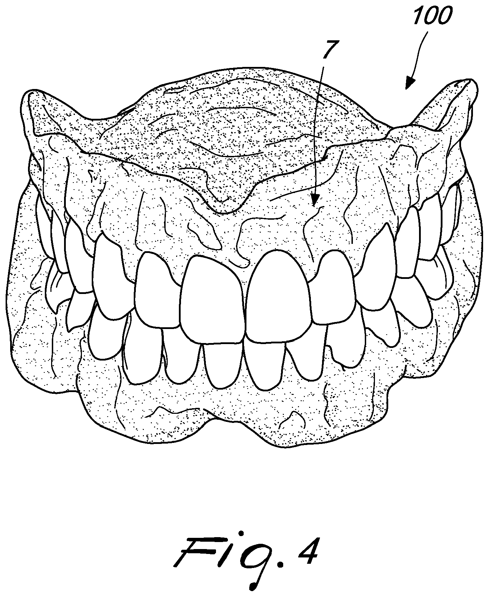

Figure 4 illustrates, merely by way of nonlimiting example of the application of the invention, an example of an anatomical prototype 100 of the prosthetic type, intended for edentulous subjects 2.

The subject 2 for whom the treatment is intended may have suffered traumas and be affected by disorders of any kind, and in this case the method 1 can have the function of anticipating the outcome of actions (surgical or nonsurgical) aimed at restoring the original teeth and/or an optimum smile, or at least to improve them, giving a more appreciated appearance to the subject 2.

The subject 2 intended to receive the treatment can also be for all purposes healthy, and he or she wishes to simply undergo aesthetic treatments as he or she is not satisfied with his or her current appearance.

The prototype 100 can also be used for other purposes, for example it can be used by the surgeon as a base on which to check or model further prostheses or other devices (to be installed in the mouth of the subject 2, after the hypothesized treatments).

Further purposes and aims which lead to the execution of the method 1 and to the provision of the prototype 100 are in any case not excluded.

In any case, it is specified furthermore that the surgeon, even before beginning the process 1, may already have in mind the actions to perform and their effect on the teeth, and in this case the method 1 is aimed at providing a prototype 100 that simulates the outcome of these known actions in order to share it with the subject 2. As an alternative, with the execution of method 1, and therefore by modeling a prototype 100 taking into account the shape of the mouth, as will become better apparent hereinafter, it is possible to define the actions to be performed on the subject 2, which must indeed allow to obtain teeth that conform to what has been identified, indeed by means of the method 1, as the best treatment for the subject 2.

According to the invention, the method 1 consists first of all, in a step a., in applying to the face of the subject 2 an instrument 3 provided with at least one pair of reference elements 4 arranged at a known distance.

Subsequently, the method 1 according to the invention provides, in a step b., for installing a retractor 5 in the mouth of the subject 2 and acquiring a first photograph of the face of the subject 2 which illustrates the reference elements 4 and his or her current teeth 6. In practice, step b. provides simply for picturing the face of the subject 2, taking care to make him or her smile, so as to indeed include in the target both the reference elements 4, provided on the instrument 3 applied to the face, and his or her current teeth 6. By virtue of the retractor 5, moreover, the first photograph substantially shows the entire dental arches of the subject 2 also for the portions that are normally hidden by the lips or cheeks.

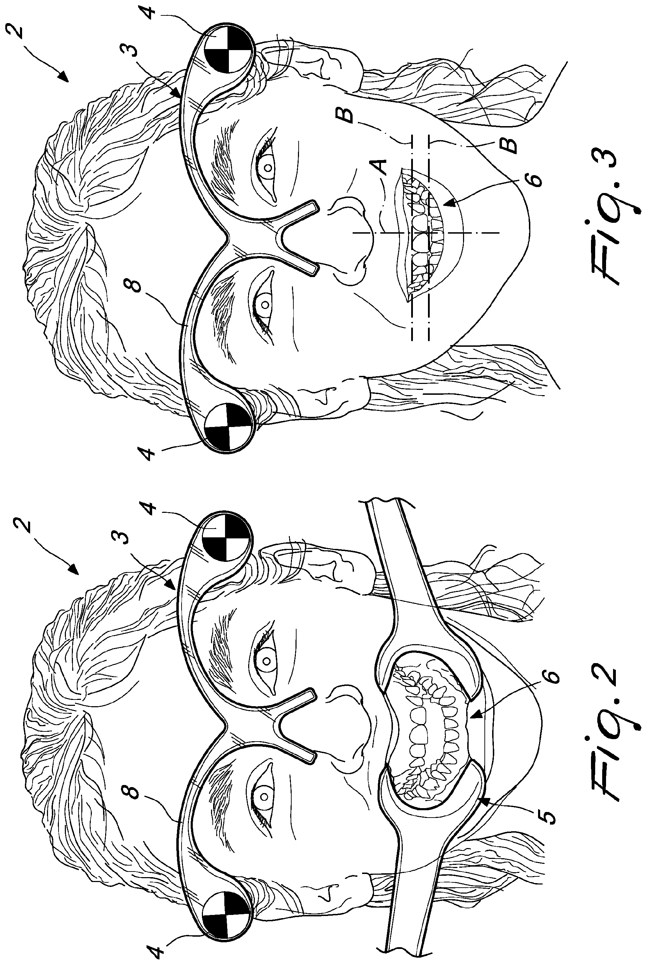

More precisely, the first photograph (of which Figure 2 shows an example) is preferably provided with the arches partially open and allows to assess correctly both the parallelism between the bi-pupillary and occlusal planes and the match between the central median line A and the inter-incisor line.

Since step b. (like the method 1 according to the invention) can be performed also for edentulous subjects 2, the first photograph may also simply show the lack of teeth.

The method 1 according to the invention thus provides, in a step c., for removing the retractor 5 from the mouth of the subject 2 and acquiring a second photograph of the face of the subject 2 in the same pose as the first photograph and showing once again the reference elements 4 and his or her current teeth 6 (and/or lack of teeth).

It should be noted that the second photograph (of which Figure 2 shows an example) is in practice similar to the first one, differing due to the absence of distortions in the facial expression (caused in the first photograph by the retractor 5) and due to the lack of reproduction of parts of the dental arches (hidden by the lips and cheeks, no longer retracted by the retractor 5).

The second photograph furthermore allows to assess the arrangement of the incisal plane with respect to the lower lip as well as the breadth of the lateral corridors.

It is specified that steps b. and c. can be performed in any chronological order without thereby abandoning the protective scope claimed herein.

In order to keep the subject 2 in a position that is stable and repeatable over time (and thus acquire two photographs in the same pose), said subject is made to sit while keeping his or her back straight, and the photographs are (preferably) taken along an aesthetic plane that is similar to the horizontal plane. The camera is (preferably) located at the same height as the face of the subject 2 in a vertical position, so that the subject can look directly into the lens and so that the bi-pupillary plane is as parallel as possible to the horizontal plane.

Merely by way of example, mention is made therefore to the possibility to mount the camera on a 120-cm tripod, at a distance from the subject 2 equal to 60 cm for the first photograph and 150 cm for the second photograph.

The method 1 then provides, in a step d. (which can even precede one or more of the preceding steps), for subjecting the dental arches of the subject 2 to optical scanning in order to acquire information on dental occlusion and/or on arch anatomy. As is known, the expression "dental occlusion" identifies the relationships that the mastication surfaces of the teeth assume with respect to each other upon closure of the dental arches.

Step d., performed for example by picturing the lower arch from above and the upper arch from below, allows to acquire important information on the mutual arrangement of said arches, on their curvature and in general on their three-dimensional extension and their shape. This information is therefore in a way complementary to the information that can be deduced from the photographs obtained in steps b. and c., which obviously offer a "two-dimensional" situation of the front appearance of said arches.

In practice, step d. can be performed by means of commercial scanners, such as for example the one marketed under the tradename "Trios" by the Danish company 3Shape A/S.

The method 1 therefore provides, in a step e., for supplying at least the photographs to at least one software application (or to a package of applications) adapted to be run on an electronic processing device associated with a respective display (a monitor, a screen, of any kind).

The electronic device typically is a personal computer, but it can also be a server computer, a mobile device such as for example a tablet, or others, without thereby abandoning the protective scope claimed herein.

The application can be provided ad hoc or can be chosen among the ones that are already commercially available (for example, the DSS software, sold by the Italian company Digital Smile System srl), capable of performing the functions that will be described in the paragraphs that follow.

In any case, the execution of step e. allows to view (on the display) a first digital image and a second digital image, which can indeed be subsequently processed by the application and correspond respectively to the first photograph and to the second photograph.

The method 1 according to the invention then provides, in a step f., for calibrating the software application on the basis of the known distance between the references 4, which can be detected in the first image and/or in the second image.

For being able to process the images correctly and being able to rely on a precise match between the dimensions and proportions between the pixels on the screen and the actual ones of the subject 2, step f. is obviously crucial, since it allows to know precisely the respective scale factor.

It is in fact sufficient to supply the application with the information related to the distance in centimeters between the two references 4 (for example chosen equal to 17 cm) in order to allow said application to know and return the measurements in centimeters of any element in the images, by relating the measurements in pixels on said images to the measurement in pixels of the distance between the reference elements 4, the measurement of which is indeed known also in centimeters.

The method 1 according to the invention further provides, in a step g., for performing a facial analysis of the second digital image in order to identify at least one parameter that is descriptive of the symmetry and proportions of the face and/or of the current teeth 6. This parameter can be subsequently used by the application (as will become better apparent hereinafter) as a reference element for subsequent image processing.

In particular, step g. provides for performing a facial analysis aimed at identifying at least one parameter chosen between the upper and/or lower median line A (which can coincide or not), the bi-pupillary line, the occlusal plane, the longitudinal lines of each tooth, the ratio between height and width of each tooth, the ratio between the dimensions of the various teeth, the radius of curvature of the gum parables, the radius of curvature of the lower profile of the upper dental arch and/or of the upper profile of the lower dental arch.

Even more particularly, in the preferred embodiment of the invention, step g. provides at least for identifying the median line A (shown for the sake of greater clarity in Figure 3), but it is stressed that other practical choices are not excluded.

The method 1 according to the invention furthermore provides, in a step h., for tracing on the second digital image the internal profile of the lips. By tracing this profile it is thus possible to obtain the delimitation of a graphic area of interest, which contains at least partially the current teeth 6. By smiling, the subject 2 in fact obviously shows part of the teeth (and of the palate) and in general by observing the face frontally (as indeed taken in the first and second digital images), between the lips there is a partial view of the inside of the mouth. By tracing the profile it is thus possible to define precisely the contour of the portion of the second digital image that indeed corresponds to this partial vision. The usefulness of this step h. will be clarified hereinafter.

The method 1 according to the invention then provides, in a step i., a digital representation of target teeth 7, which can be obtained as an outcome of the treatment to be performed on the subject 2 as a replacement of the current teeth 6.

It is appropriate to stress that in the execution of step i. (and of the method 1 in general), it is possible to consider some constraints dictated by the specific requirements or demands of the subject 2, for example if he or she requires specific procedures or treatments on one or more deteriorated or missing teeth. In this case, therefore, the prototype 100 to be obtained must match these constraints and the treatment to be performed must include these procedures or treatments. As an alternative, the surgeon (typically but not exclusively a dentist) may simply create the target teeth 7 that best suit the face of the subject 2 and its shape and therefore the treatment to be followed is simply defined by the actions required to obtain the identified target teeth 7.

In any case, the method for creating the digital representation may be any, as a function of the requirements and of the possibilities offered by the software application chosen for the execution of the method 1 according to the invention.

In particular, in one embodiment of considerable practical interest, which in any case does not limit the application of the invention, step i. can provide, in a substep i1., the digital representation of the target teeth 7 starting from sample teeth, chosen from a library associated with the software application. This library contains a range of possible sample teeth saved beforehand in a memory unit associated with the application and/or with the electronic device. These sample teeth can be saved in the library exclusively in their two-dimensional representation or can be associated with a respective three-dimensional representation.

The substep i1. can be performed automatically by the application, since it is provided with instructions for choosing the sample teeth most suited to the specific circumstances on the basis of shapes (of teeth) that belong to the oval, triangular or square type. As an alternative, substep i1. can be performed directly by the surgeon (dentist or other) indeed by choosing from the library the one that he deems best suited for the face of the subject 2, for his psychological profile, or for his aesthetic demands.

As an alternative to substep i1., step i. can provide, in a substep i2., the digital representation of the target teeth 7 starting from a repositioning of the current teeth 6 inside the mouth.

In this case, therefore, the method provides for (re-)using the same current teeth 6 of the subject 2 in order to create the digital representation of the target teeth 7, modifying the position of the existing teeth inside the mouth. This is a solution that can be more appreciated by the subject 2, since the simple repositioning of the current teeth 6, instead of the full replacement provided in substep i1., attenuates the surprise effect and the feeling of extraneousness that otherwise the subject 2 might experience when looking at himself or herself in the mirror at the end of the treatment.

It should be noted that the current teeth 6 used in substep i2. can in turn be added to the library or stored separately, like a sort of customized individual library, even for future uses.

After substep i1. or substep i2., usefully step i. can provide, in a substep i3., for altering the dimensions and proportions of the teeth until the target teeth 7 are determined.

In substep i3., therefore, the surgeon (or someone on his behalf) can modify the chosen sample teeth (substep i1.) or the repositioned current teeth 6 of the subject 2 (substep i2.) if he deems further adaptations or modifications are necessary, in order to obtain the target teeth 7.

It should be noted that the application allows the surgeon or in any case the operator to position two horizontal lines B on the first digital image, which are aligned with the upper and lower margins of the central incisors (of the current teeth 6, in the upper and/or lower arch). The center distance between the two horizontal lines B (which have been shown for the sake of greater clarity in Figure 3) thus corresponds to the center distance between the incisal border and the cervical border between which the incisors of the target teeth 7 are to be positioned, thus providing a visual indication of their maximum allowable dimension (on which, moreover, the dimensions of the other teeth are to be modeled proportionally).

It is stressed in any case that substeps i1., i2., and i3. identify exclusively some possible (albeit preferred) modes of execution of the method 1 according to the invention, since step i. can be performed even differently, remaining in any case within the protective scope claimed herein.

In any case, after completing step i., the method 1 provides, in a step j., for visualizing the external contour of the target teeth 7 (obtained indeed in its two-dimensional digital representation in the preceding step i.).

This allows to verify the placement and dimensions of the target teeth 7 with respect to the current teeth 6 of the subject 2. In practice, in other words, step j. provides for ascertaining that what has been created digitally has dimensions and configurations that conform to those of the mouth of the subject 2.

The method 1 according to the invention then provides, in a step k., for replacing the graphic area of interest of the second digital image, defined in step h., with the corresponding portion of the digital representation of the target teeth 7. In this manner it is possible to obtain a third digital image which in fact anticipates the new smile (and the new teeth) that the subject 2 might obtain by following the treatment that he or she is hypothetically to undergo.

The third image can then be shared with the subject 2, in order to test his or her appreciation even before starting any action on him or her (and even before beginning the production of the prototype 100) in order to obtain his or her approval to proceed and/or to discuss any criticalities (which can be corrected for example by repeating step i.).

Step k. is performed by the application on the basis of the at least one parameter identified in step g.: having in fact acquired a parameter that describes the symmetry and proportions of the face and/or of the current teeth 6 (be it the median line A or others), the application can easily reposition the digital representation of the target teeth 7 on the second digital image by indeed referring to this parameter.

Step g. can thus be performed even after steps h., i. and j., although in any case it has to be (obviously) performed at least before step k..

Finally, in a step 1., the method 1 according to the invention allows to provide a three-dimensional prototype 100 of at least one portion of the target teeth 7, on the basis of the (two-dimensional) digital representation thereof (obtained in step i. and subsequently checked) and of the information obtained in step d..

In particular, in one embodiment of considerable practical interest, step 1. provides, in a seven step 11., for aligning the two-dimensional digital representation of the target teeth 7 obtained in step i. (the profiles and shapes of the teeth) with the information obtained by optical scanning in step d., which illustrates the three-dimensional configuration of the teeth (the curvature and in general the anatomy of the arches) in the mouth of the subject 2. The result of substep 11. can be constituted for example by a file of the STL type.

Substep 11. can be performed by dedicated software, even obtained commercially: for example, a suitable software might be the one known as DSS CAD, marketed by the Italian company EGS srl.

Then, in a substep 12., step 1. provides for modeling the actual prototype 100, on the basis of the alignment performed in step 11..

Substep 12. can be performed for example by supplying the STL file obtained in substep 11. to 3D software and printers that adopt 3D SLA technologies (for example "Form 2", of the US company FormLabsInc), for the provision of prototypes 100 made of methacrylic photoreactive resin (photopolymer resin). Examples of this resin are known in the field by the acronyms "GPWH02 or "GPGR03."

In one embodiment of considerable practical interest, shown in the accompanying figures by way of nonlimiting example of the application of the invention, the instrument 3 involved in steps a. and b. of the method 1 is constituted substantially by a pair of glasses, even without lenses. In this case, the references 4 are arranged (preferably but not exclusively) at the ends of the front portion of the frame 8 of the pair of glasses.

It has already been observed that the method 1 can be aimed at providing a prototype 100 for at least partially edentulous subjects 2 (lacking one or both dental arches or only a few teeth).

In this case, advantageously the method 1 provides, in a step a1. that precedes step b. (or step c. if performed before step b.), for applying at least one block (identified by the expression "occlusal rim"), for example made of wax and/or resin, which indeed simulates the volume of a dental arch.

Positively, the method 1 can provide (preferably but not exclusively), in a step h1. which follows step h., for superimposing the first image on the second image or vice versa, mutually aligning them. The execution of step h. allows to provide in an optimum manner the three-dimensional prototype 100; indeed because it is aimed at the provision of the prototype 100, performed in step 1., step h1. can be performed at any time before the latter, after step h..

In greater detail, the execution of step h1. allows the correct management of the first image and of the second image by the software that deals with step l1. and/or the software/printer that deals with substep l2., which indeed require being able to rely on the alignment of the main anatomical references of the elements to be reproduced.

In particular, step h1. provides for identifying known points which are common to the first image and to the second image for optimum superimposition. These common points can be for example of the type of incisal angles, the cusps of canines, and the like.

In addition to the method 1 described in the preceding pages, the subject matter of the present invention also relates to an anatomical prototype 100, which is adapted to simulate the outcome of a treatment to be performed in the mouth of a subject 2 and is provided indeed by means of the method 1 according to what has been described so far.

It has thus been shown that the method 1 according to the invention allows to provide an anatomical prototype 100, to be shown to a subject 2 before starting the treatment that one wishes to perform in the mouth thereof. The prototype 100 in fact replicates the target teeth 7, i.e., what the surgeon (dentist or other) aims to obtain with the treatment, and therefore allows to share it in advance with the subject 2. The latter can thus confirm his appreciation, avoiding the unpleasant surprises that might occur if he or she should observe, once the treatment has been performed, that his or her mouth has been modified in a manner that does not comply with the expectations.

More generally, the anatomical prototype 100, obtained with the method 1, has a fundamental predictive role, simulating and anticipating faithfully the outcome of interventions and treatments of various kinds on the mouth of the subject 2.

The prototype 100, by effectively replicating the target teeth 7 and therefore the configuration assumed after the treatment by the mouth of the subject 2, furthermore allows the surgeon to verify compatibility with any prostheses or implants to be installed subsequently, thus avoiding once again identifying a criticality only after altering the mouth of the subject 2.

These unquestionably important results are achieved by means of a method 1 that can be performed in a fully practical and easy manner, requiring a small number of simple activities that can be performed mostly in front of the screen of a personal computer and by taking photographs of the subject 2.

In greater detail, it should be noted that the method 1 provides only four steps (a. to d.) performed in a surgery with the participation of the subject 2. Therefore, the latter needs to undergo a single session (in which all four steps a. to d. can be completed rapidly) to then receive the prototype 100 directly. Differently from what occurs according to the background art, the method 1 therefore allows to obtain a prototype 100 without requiring frequent and prolonged sessions of the subject 2, thus causing him very limited inconvenience. Besides, the only session requires taking a few photographs and subjecting the subject 2 to optical scanning: these are very quick activities and they are faster than the ones required to obtain impressions of the dental arches, as indeed provided with the background art.

The subsequent steps e. to k. are instead performed by the surgeon (or someone on his behalf) by using the software application and therefore digitally, being able to remain comfortably seated in front of the display of the electronic device. Finally, step 1. provides for resorting to a 3D printer or to other three-dimensional modeling devices. In any case, the method 1 according to the invention spares the surgeon from laborious and complex manual work activities for the preparation of impressions and models and in general requires the latter a minimal effort.

Moreover, since it is possible to work by using a software application (or a package of software applications), the method 1 significantly reduces the unpredictability of the outcome, which is instead very present if one resorts to manual activities of the known type.

## Claims

1. A method for providing an anatomical prototype, adapted to simulate the outcome of a treatment that can be performed on a subject (2), which consists in:
a. applying to the face of the subject (2) an instrument (3) provided with at least one pair of reference elements (4) arranged at a known distance;
b. installing a retractor (5) in the mouth of the subject (2) and acquiring a first photograph of the face of the subject (2), which illustrates the reference elements (4) and his or her current teeth (6);
c. removing the retractor (5) from the mouth of the subject (2) and acquiring a second photograph of the face of the subject (2), in the same pose as the first photograph and illustrating the reference elements (4) and his or her current teeth (6);
d. subjecting the dental arches of the subject (2) to optical scanning, in order to acquire information regarding dental occlusion and/or the anatomy of the arches;
e. providing at least the photographs to at least one software application adapted to be run on an electronic processing device associated with a respective display, for the visualization of a first digital image and of a second digital image, which can be processed by the application and correspond respectively to the first photograph and to the second photograph;
f. calibrating the software application on the basis of the known distance between the reference elements (4), which can be detected in the first image and/or in the second image;
g. performing a facial analysis of the second digital image, for the identification of at least one parameter that describes the symmetry and proportions of the face and/or of the current teeth (6);
h. tracing on the second digital image the internal profile of the lips, in order to delimit a graphic area of interest, which contains at least partially the current teeth (6);
i. creating a digital representation of target teeth (7), which can be obtained as an outcome of the treatment to be performed on the subject (2) as a replacement of the current teeth (6);
j. visualizing the external contour of the target teeth (7), in order to verify the position and size of the target teeth (7) with respect to the current teeth (6) of the subject (2);
k. replacing the graphical area of interest of the second digital image with the corresponding portion of the digital representation of the target teeth (7), on the basis of the at least one parameter identified in said step g.;
l. providing a three-dimensional prototype (100) of at least one portion of the target teeth (7), on the basis of the digital representation of the target teeth (7) and of the information obtained in said step d..

2. The method according to claim 1, **characterized in that** said instrument (3) is constituted substantially by a pair of glasses, optionally without lenses, the references (4) being arranged at the ends of the front portion of the frame (8) of the pair of glasses.

3. The method according to claim 1 or 2, **characterized in that** it provides, in a step a1. which precedes said step b., for the application of at least one block which simulates the space occupation of a dental arch, for a subject (2) that is at least partially edentulous.

4. The method according to one or more of the preceding claims, **characterized in that** said step g. provides for performing a facial analysis aimed at identifying at least one parameter chosen between the upper and/or lower median line (A), the bi-pupillary line, the occlusal plane, the longitudinal lines of each tooth, the ratio between height and width of each tooth, the ratio between the dimensions of the various teeth, the radius of curvature of gingival parabolas, the radius of curvature of the lower profile of the upper dental arch and/or of the upper profile of the lower dental arch.

5. The method according to one or more of the preceding claims, **characterized in that** it provides, in a step h1. which follows said step h., for superimposing the first image on the second image or vice versa, mutually aligning them, for the optimum provision of the three-dimensional prototype (100).

6. The method according to claim 5, **characterized in that** said step h1. provides for identifying known points which are common to the first image and to the second image, for optimum superimposition, the common points being of the type of the incisal angles, of the cusps of the canines, and the like.

7. The method according to one or more of the preceding claims, **characterized in that** said step i. provides, in a substep i1., for obtaining the digital representation of the target teeth (7) starting from sample teeth, chosen from a library associated with said software application.

8. The method according to one or more of the preceding claims, **characterized in that** said step i. provides, in a substep i2. which is an alternative to said step i1., for obtaining the digital representation of the target teeth (7) starting from a repositioning inside the mouth of the current teeth (6).

9. The method according to claim 7 or 8, **characterized in that** said step i. provides, in a substep i3., which follows said substep i1. or said substep i2., for altering the dimensions and proportions of the teeth, up to the determination of the target teeth (7).

10. The method according to one or more of the preceding claims, **characterized in that** said step 1. provides for
- 11. aligning the two-dimensional digital representation of the target teeth (7) with the information obtained in said step d.,
- 12. modeling the prototype (100) on the basis of the alignment performed in said step 11.

## Patentansprüche

1. Ein Verfahren zur Bereitstellung eines anatomischen Prototyps, der ausgebildet ist, den Ausgang einer Behandlung zu simulieren, die bei einem Individuum (2) durchgeführt werden kann, aus Folgendem bestehend:
a. Anbringen eines Instruments (3), dass mit mindestens einem Paar in einem Abstand angeordneter Referenzelemente (4) ausgestattet ist, an das Gesicht des Individuums (2);
b. Anbringen eines Retraktors (5) im Mund des Individuums (2) und Erfassen eines ersten Fotos des Gesichts des Individuums (2), wobei das Foto die Referenzelemente (4) und seine oder ihre derzeitigen Zähne (6) zeigt;
c. das Entfernen des Retraktors (5) aus dem Mund des Individuums (2) und das Aufnehmen eines zweiten Fotos des Gesichts des Individuums (2), in derselben Position wie das erste Foto und die Bezugselemente (4) und seine oder ihre derzeitigen Zähne (6) darstellend;
d. das Unterziehen der Zahnbögen des Individuums (2), gegenüber optischen Scanning, um Informationen zur Zahnokklusion und/oder zur Anatomie der Bögen zu erfassen;
e. das Bereitstellen mindestens der Fotos an mindestens eine Softwareanwendung, die ausgebildet ist, um auf einer elektronischen Verarbeitungsvorrichtung zu laufen, welche mit einer entsprechenden Anzeige verbunden ist, zur visuellen Darstellung eines ersten digitalen Bildes und eines zweiten digitalen Bildes, die von der Anwendung verarbeitet werden können und dem ersten Foto beziehungsweise dem zweiten Foto entsprechen;
f. das Kalibrieren der Softwareanwendung auf der Grundlage des bekannten Abstands zwischen den Referenzelementen (4), der im ersten Bild und/oder im zweiten Bild erfasst werden kann;
g. das Durchführen einer Gesichtsanalyse des zweiten digitalen Bildes, zur Bestimmung mindestens eines Parameters, die die Symmetrie und die Proportionen des Gesichts und/oder der derzeitigen Zähne (6) beschreibt;
h. das Abtasten, im zweiten digitalen Bild des Innenprofils der Lippen, um einen graphischen Bereich von Interesse zu begrenzen, der die derzeitigen Zähne (6) zumindest teilweise enthält;
i. das Erzeugen einer digitalen Darstellung von Zielzähnen (7), das erzielt werden kann als Ausgang einer Behandlung, die bei einem Individuum (2) zum Ersetzen der derzeitigen Zähne (6) durchgeführt wird,
j. das Visualisieren der externen Kontur der Zielzähne (7) zur Überprüfung der Position und Größe der Zielzähne (7) mit Bezug auf die derzeitigen Zähne (6) des Individuums (2);
k. das Ersetzen des graphischen Bereichs von Interesse im zweiten digitalen Bild, durch den entsprechenden Abschnitt der digitalen Darstellung der Zielzähne, auf der Grundlage des mindestens eines Parameters der in Schritt g. identifiziert wurde;
l. das Bereitstellen eines dreidimensionalen Prototyps (100), mindestens eines Teils der Zielzähne (7), auf der Grundlage der digitalen Darstellung der Zielzähne (7) und der in Schritt d. gewonnenen Informationen.

2. Das Verfahren gemäß Anspruch 1, **dadurch gekennzeichnet, dass** das Instrument (3) im Wesentlichen in einer Brille, wahlweise ohne Linsen, besteht, wobei die Referenzen (4) an den Enden des vorderen Abschnitts des Rahmens (8) der Brille angeordnet sind.

3. Das Verfahren gemäß Anspruch 1 oder 2, **dadurch gekennzeichnet, dass** es in einem Schritt a1. der dem Schritt b. vorangeht, die Anwendung mindestens eines Blocks vorsieht, der den Platzbedarf eines Zahnbogens bei einem Individuum (2) simuliert, dass zumindest teilweise zahnlos ist.

4. Das Verfahren gemäß einem oder mehreren der obigen Ansprüche, **dadurch gekennzeichnet, dass** der Schritt g. die Durchführung einer Gesichtsanalyse vorsieht, die auf die Bestimmung mindestens eines Parameters abzielt, gewählt aus der oberen und/oder unteren Medianlinie (A), der Bipupillarlinie, der Okklusionsebene, der Längslinien jedes Zahns, des Verhältnisses zwischen Höhe und Breite jedes Zahns, des Verhältnisses zwischen den Abmessungen der verschiedenen Zähne, des Krümmungsradius von Gingivalparabeln, des Krümmungsradius des unteren Profils des oberen Zahnbogens und/oder des oberen Profils des unteren Zahnbogens.

5. Das Verfahren gemäß einem oder mehreren der obigen Ansprüche, **dadurch gekennzeichnet, dass** es in einem Schritt h1. der auf den Schritt h. folgt, das Überlagern des zweiten Bildes durch das erste Bild oder umgekehrt vorsieht, wobei sie miteinander ausgerichtet werden zur optimalen Bereitstellung des dreidimensionalen Prototyps (100).

6. Das Verfahren gemäß Anspruch 5, **dadurch gekennzeichnet, dass** der Schritt h1. die Bestimmung bekannter Punkte vorsieht, die das ersten Bild und das zweite Bild gemeinsam haben zur optimalen Überlagerung, wobei die gemeinsamen Punkte von der Art von Schneidezahnwinkeln, der Spitzen von Eckzähnen und dergleichen sind.

7. Das Verfahren gemäß einem oder mehreren der obigen Ansprüche, **dadurch gekennzeichnet, dass** der Schritt i. in einem Teilschritt i1. die Erfassung der digitalen Darstellung der Zielzähne (7), ausgehend von Zahnproben, vorsieht, die gewählt sind aus einer mit der Softwareanwendung verknüpften Bibliothek.

8. Das Verfahren gemäß einem oder mehreren der obigen Ansprüche, **dadurch gekennzeichnet, dass** der Schritt i. in einem Teilschritt i2. der eine Alternative zu dem Schritt i1. ist, die digitale Darstellung der Zielzähne (7) ausgehend von einer Neupositionierung der derzeitigen Zähne (6) im Mund vorsieht.

9. Das Verfahren gemäß Anspruch 7 oder 8, **dadurch gekennzeichnet, dass** der Schritt i. in einem Teilschritt i3. der auf den Teilschritt i1. oder den Teilschritt i2. folgt, die Änderung der Dimensionen und Proportionen der Zähne bis zur Bestimmung der Zielzähne (7) vorsieht.

10. Das Verfahren gemäß einem oder mehreren der obigen Ansprüche, **dadurch gekennzeichnet, dass** der Schritt 1 Folgendes vorsieht:
- 11. die Ausrichtung der zweidimensionalen digitalen Darstellung der Zielzähne (7) mit den in dem Schritt d. gewonnenen Informationen;
- 12. die Modellierung des Prototyps (100) auf der Grundlage der in dem Schritt 11 durchgeführten Ausrichtung.

## Revendications

1. Procédé pour fournir un prototype anatomique, adapté pour simuler le résultat d'un traitement qui peut être réalisé sur un sujet (2), qui consiste à :
a. appliquer sur le visage du sujet (2) un instrument (3) pourvu d'au moins une paire d'éléments de référence (4) agencés à une distance connue,
b. installer un écarteur (5) dans la bouche du sujet (2) et acquérir une première photographie du visage du sujet (2), qui illustre les éléments de référence (4) et ses dents actuelles (6),
c. retirer l'écarteur (5) de la bouche du sujet (2) et acquérir une seconde photographie du visage du sujet (2), dans la même pose que la première photographie et illustrer les éléments de référence (4) et ses dents actuelles (6),
d. soumettre les arcades dentaires du sujet (2) à un balayage optique, afin d'acquérir des informations concernant une occlusion dentaire et/ou l'anatomie des arcades,
e. fournir au moins les photographies à au moins une application logicielle adaptée pour être exécutée sur un dispositif de traitement électronique associé à un affichage respectif, pour la visualisation d'une première image numérique et d'une seconde image numérique, qui peuvent être traitées par l'application et correspondent respectivement à la première photographie et à la seconde photographie,
f. étalonner l'application logicielle sur la base de la distance connue entre les éléments de référence (4), qui peut être détectée dans la première image et/ou dans la seconde image,
g. réaliser une analyse faciale de la seconde image numérique, pour l'identification d'au moins un paramètre qui décrit la symétrie et les proportions du visage et/ou des dents actuelles (6),
h. tracer sur la seconde image numérique le profil interne des lèvres, afin de délimiter une zone graphique d'intérêt, qui contient au moins partiellement les dents actuelles (6),
i. créer une représentation numérique des dents cibles (7), qui peut être obtenue en résultat du traitement à réaliser sur le sujet (2) en remplacement des dents actuelles (6),
j. visualiser le contour externe des dents cibles (7), afin de vérifier la position et la taille des dents cibles (7) par rapport aux dents actuelles (6) du sujet (2),
k. remplacer la zone graphique d'intérêt de la seconde image numérique par la partie correspondante de la représentation numérique des dents cibles (7), sur la base du au moins un paramètre identifié à ladite étape g.,
l. fournir un prototype tridimensionnel (100) d'au moins une partie des dents cibles (7), sur la base de la représentation numérique des dents cibles (7) et des informations obtenues à ladite étape d.

2. Procédé selon la revendication 1, **caractérisé en ce que** ledit instrument (3) est sensiblement constitué d'une paire de lunettes, facultativement sans lentilles, les références (4) étant agencées aux extrémités de la partie avant de la monture (8) de la paire de lunettes.

3. Procédé selon la revendication 1 ou 2, **caractérisé en ce qu'**il permet, à une étape a1. qui précède ladite étape b., l'application d'au moins un bloc qui simule l'occupation spatiale d'une arcade dentaire, pour un sujet (2) qui est au moins partiellement édenté.

4. Procédé selon une ou plusieurs des revendications précédentes, **caractérisé en ce que** ladite étape g. permet de réaliser une analyse faciale visant à identifier au moins un paramètre choisi entre la ligne médiane (A) supérieure et/ou inférieure, la ligne bi-pupillaire, le plan occlusal, les lignes longitudinales de chaque dent, le rapport entre hauteur et largeur de chaque dent, le rapport entre les dimensions des différentes dents, le rayon de courbure des paraboles gingivales, le rayon de courbure du profil inférieur de l'arcade dentaire supérieure et/ou le profil supérieur de l'arcade dentaire inférieure.

5. Procédé selon une ou plusieurs des revendications précédentes, **caractérisé en ce qu'**il permet, à une étape h1. qui suit ladite étape h., de superposer la première image sur la seconde image ou vice versa, en les alignant mutuellement, pour la fourniture optimale du prototype tridimensionnel (100).

6. Procédé selon la revendication 5, **caractérisé en ce que** ladite étape h1. permet d'identifier des points connus qui sont communs à la première image et à la seconde image, pour une superposition optimale, les points communs étant du type des angles incisifs, des cuspides des canines et analogue.

7. Procédé selon une ou plusieurs des revendications précédentes, **caractérisé en ce que** ladite étape i. permet, à une sous-étape il., d'obtenir la représentation numérique des dents cibles (7) en partant de dents échantillons, choisies dans une bibliothèque associée à ladite application logicielle.

8. Procédé selon une ou plusieurs des revendications précédentes, **caractérisé en ce que** ladite étape i. permet, à une sous-étape i2. qui est une alternative à la ladite étape il., d'obtenir la représentation numérique des dents cibles (7) en partant d'un repositionnement à l'intérieur de la bouche des dents actuelles (6).

9. Procédé selon la revendication 7 ou 8, **caractérisé en ce que** ladite étape i. permet, à une sous-étape i3., qui suit ladite sous-étape il. ou ladite sous-étape i2., de modifier les dimensions et les proportions des dents, jusqu'à la détermination des dents cibles (7).

10. Procédé selon une ou plusieurs des revendications précédentes, **caractérisé en ce que** ladite étape 1. permet de
- 11. aligner la représentation numérique bidimensionnelle des dents cibles (7) avec les informations obtenues à ladite étape d.,
- 12. modéliser le prototype (100) sur la base de l'alignement réalisé à ladite étape 11.
